## Europäisches Patentamt

## European Patent Office

## Office européen des brevets

(19)

(11) Veröffentlichungsnummer: **0 026 480**
**B1**

(12) **EUROPÄISCHE PATENTSCHRIFT**

(45) Veröffentlichungstag der Patentschrift:
**21.12.83**

(51) Int. Cl.³: **G 01 S 7/36**

(21) Anmeldenummer: **80105830.6**

(22) Anmeldetag: **25.09.80**

(54) Schaltungsanordnung zur Nebenzipfelunterdrückung in Radargeräten.

(30) Priorität: **28.09.79 DE 2939512**
**28.09.79 DE 2939511**
**23.10.79 DE 2942778**

(43) Veröffentlichungstag der Anmeldung:
**08.04.81 Patentblatt 81/14**

(45) Bekanntmachung des Hinweises auf die Patenterteilung:
**21.12.83 Patentblatt 83/51**

(84) Benannte Vertragsstaaten:
**FR GB IT NL**

(56) Entgegenhaltungen:
**DE - A - 2 714 908**
**DE - B - 2 650 547**
**GB - A - 1 532 935**
**US - A - 3 881 177**
**US - A - 4 021 805**

(73) Patentinhaber: **SIEMENS AKTIENGESELLSCHAFT,**
**Berlin und München Wittelsbacherplatz 2,**
**D-8000 München 2 (DE)**

(72) Erfinder: **Hauptmann, Rudolf, Ing. grad.,**
**Ferchenseestrasse 20, D-8000 München 70 (DE)**
Erfinder: **Foeller, Gerhard, Dipl.-Ing., Ahornweg 13,**
**D-8135 Söcking (DE)**

## Schaltungsanordnung zur Nebenzipfelunterdrückung in Radargeräten

Die Erfindung bezieht sich auf eine Schaltungsanordnung zur Nebenzipfelunterdrückung in Radargeräten, unter Verwendung einer Regelschleife als Teil einer Kompensationsschaltung, in der ein über die Nebenzipfel der Radarantenne empfangenes Störsignal durch ein über eine Rundstrahl-Hilfantenne erhaltenes Hilfssignal des gleichen Störers nach dessen Wichtung in einem Wichtungsmultiplizierer mittels eines in einem Rückführungszweig zwischen einem Korrelator und dem Wichtungsmultiplizierer der Regelschleife vom Korrelationsprodukt des entstörten Ausgangssignals der Nebenzipfelunterdrückung und des Hilfssignals abgeleitete Wichtungsfaktors in einem Subtrahierer kompensiert wird (Side-Lobe-Canceller, SLC).

Über Nebenzipfel einer Radarantenne empfangene Störsignale können im Radarempfänger zu einer erheblichen Beeinträchtigung in der Verarbeitung der Nutzsignale führen. Dieser Nachteil tritt dann besonders zutage, wenn der Wunsch nach kleinen Antennenabmessungen in Verbindung mit einem hohen Antennengewinn in der Hauptstrahlrichtung eine verminderte Nebenzipfeldämpfung zur Folge hat. Der Antennenreflektor wird dann vom Primärstrahler möglichst weitgehend ausgeluchtet. Dadurch entstehen in verstärktem Maße Nebenzipfel, die es einem Störer erleichtern, auch dann in den Radarempfänger einzudringen und den Signalverarbeitungsprozeß zu stören, wenn die Hauptkeule der Radarantenne nicht auf ihn gerichtet ist. Ein ausreichend starker Störer ist somit in der Lage, mehr oder weniger stark im ganzen azimutalen Erfassungsbereich die Wirksamkeit des Radars zu beeinträchtigen.

Es ist bereits bekannt, die Störenergie durch eine sogenannte Nebenzipfelunterdrückung (Side-Lobe-Suppression) selektiv zu bedämpfen, ohne das über die Hauptkeule empfangene Signal nennenswert zu beeinflussen.

Eine der bekannten Schaltungen zur Nebenzipfelunterdrückung arbeitet nach dem Prinzip der Auslöschung des Störsignals und wird mit »Side-Lobe-Canceller« (SLC) bezeichnet. Diese Schaltung erfordert neben dem Radarempfänger mit seiner Antenne einen zweiten Empfangszweig mit einer eigenen Hilfsantenne, die eine Rundstrahlcharakteristik aufweist. Die Wirkungsweise dieser Schaltung besteht im Prinzip darin, daß ein im Nebenzipfelbereich der Hauptantenne empfangenes Signal auch über die Hilfsantenne empfangen und im zweiten Empfangszweig mittels einer Regeleinrichtung (Regelschleife) in Phase und Amplitude so gedreht bzw. gedämpft wird, daß es identisch gleich ist mit dem Signal aus dem Hauptkanal. Durch die Subtraktion der beiden Signale erhält man die Löschung des Störsignals (Mil. Microw. Conf., London 1978, Seite 370).

Die beiden Empfangszweige sind über eine Regelschleife miteinander verknüpft, die aus einem Subtrahierer, einem Wichtungsmultiplizierer für das Hilfssignal und einem Korrelator besteht, der in einem Rückführungszweig unter Verwendung einer Schaltung zur Mittelwertbildung und eines Verstärkers einen Wichtungsfaktor für den Wichtungsmultiplizierer erzeugt.

Mit einer derartigen Schaltungsanordnung sollen nur die im Nebenzipfelbereich der Radarantenne einfallenden Störsignale eliminiert werden. Von der Hauptkeule der Radarantenne erfaßte Ziele sollen demgegenüber möglichst ungeschwächt empfangen werden. Eine Möglichkeit, die Wirkung der Regelschleife in diesem Falle zu verringern, besteht darin, daß der Wichtungsfaktor für den Wichtungsmultiplizierer auf einen vorgegebenen Wert (z. B. Betrag 1) begrenzt wird. Dieses Verfahren hat jedoch den Nachteil, daß die Signalspannung eines erwünschten Zieles trotzdem im Verhältnis des Gewinns der Hilfsantenne/Gewinn der Radarhauptkeule gedämpft wird. Außerdem wird das thermische Rauschen des Hilfskanals in voller Stärke (bei Betrag 1) im Bereich der Hauptkeule in den Radarkanal addiert, wodurch sich der Rauschabstand des Zielsignals vermindert.

Bei vorwiegend indirektem Empfang eines Störsignals in reflexionsreicher Umgebung können infolge Mehrwegeausbreitung oder weitwinkliger diffuser Reflexion die Signale im Radar- und Hilfskanal dekorreliert sein. Da in diesem Falle das Korrelationsprodukt zwischen Radar- und Hilfssignal Null ist, wird der in der Regelschleife gebildete Wichtungsfaktor unter Umständen seinen vorherigen Wert beibehalten. Diese Eigenschaft kann sich nachteilig auf das Ausgangssignal des Radarkanals auswirken, da die mit dem zu diesem Zeitpunkt wirksamen Wichtungsfaktor bewertete Störenergie in den Radarkanal addiert wird.

Die bekannte Schaltung zur Nebenzipfelunterdrückung hat den Nachteil, daß das Einschwingverhalten ihrer Regelschleife von der Störsignalleistung abhängig ist. Üblicherweise wird die Regelschleife so dimensioniert, daß einerseits bei kleinen Störsignalpegeln der Schleppfehler noch tolerierbar ist und andererseits ein hoher Störsignalpegel nicht zur Selbsterregung der Schleife führt.

Während im allgemeinen bei analog arbeitenden Regelschleifen die Schleifendynamik der Störpegeldynamik angepaßt werden kann, ist die Dynamik digital arbeitender Schleifen infolge der Stabilitätsgrenze, die von der Abtastrate abhängig ist, nicht in allen Fällen ausreichend. Es wird dann notwendig, einen Schleppfehler in Kauf zu nehmen oder die Störleistung zu begrenzen. Bei SLC-Schaltungen, die in analoger Technik ausgeführt sind, kann im Hilfskanal eine automatische Verstärkungsregelung (AGC) vorgesehen werden, die den Pegel konstant hält. Diese Regelung verschlechtert jedoch das dynamische Verhalten der Schaltungsanord-nung bei amplitudenmodulierten Störern. Ein sprunghafter Anstieg der Störamplitude hat daher so lange ein Ausgangssignal zur Folge, bis die Wichtung auf den neuen Wert eingeschwungen ist.

Eine Aufgabe der Erfindung ist es, eine Beeinträchtigung der Echosignale erwünschter Ziele zu vermeiden, ohne die Wirkung der Störunterdrückung im Nebenzipfelbereich zu vermindern. Dabei soll auch die Störleistung im Radarkanal vermindert werden. Außerdem besteht eine weitere Aufgabe darin, die Einengung des Dynamikbereiches der Regelschleife zu vermeiden, so daß die Regelschleife unabhängig vom Störpegel mit optimaler Zeitkonstante, d. h. mit dem kleinstmöglichen Fehler, arbeitet.

Erfindungsgemäß ist die Schaltungsanordnung zur Nebenzipfelunterdrückung so ausgebildet, daß im Rückführungszweig der Regelschleife eine Überwachungsschaltung für den Betrag des Wichtungsfaktors vorgesehen ist, die bei Überschreiten eines vorgegebenen Wertes die Schaltungsanordnung zur Nebenzipfelunterdrückung unwirksam macht, und daß eine Vergleichseinrichtung die Störleistung vor und nach dem Subtrahierer im Radarkanal einer Vergleichsmessung unterzieht und den Ausgang des Radarkanals bei Überwiegen des Meßwertes auf der Ausgangsseite des Subtrahierers mittels eines Umschalters mit dem Eingang des Subtrahierers der Kompensationsschaltung verbindet, und daß ferner eine Einrichtung zur Verstärkungssteuerung für die Bildung des Wichtungsfaktors vorgesehen ist, die eine Verstärkung des Wichtungsfaktors bewirkt, die dem Quadrat der Störamplitude um Hilfskanal umgekehrt proportional ist

$$\left(V = \frac{a}{S^2}\right).$$

Liegt ein ungestörter Empfang im Radarkanal vor, dann wird durch einen Umschaltvorgang die Zunahme der Rauschleistung infolge der Verwendung einer SLC-Schaltung verhindert. Andererseits kann bei analoger und digitaler Ausbildung der SLC-Schaltung der Dynamikbereich voll genutzt werden. Außerdem ist die Schaltung gegenüber Schwankungen der Störamplitude unempfindlich.

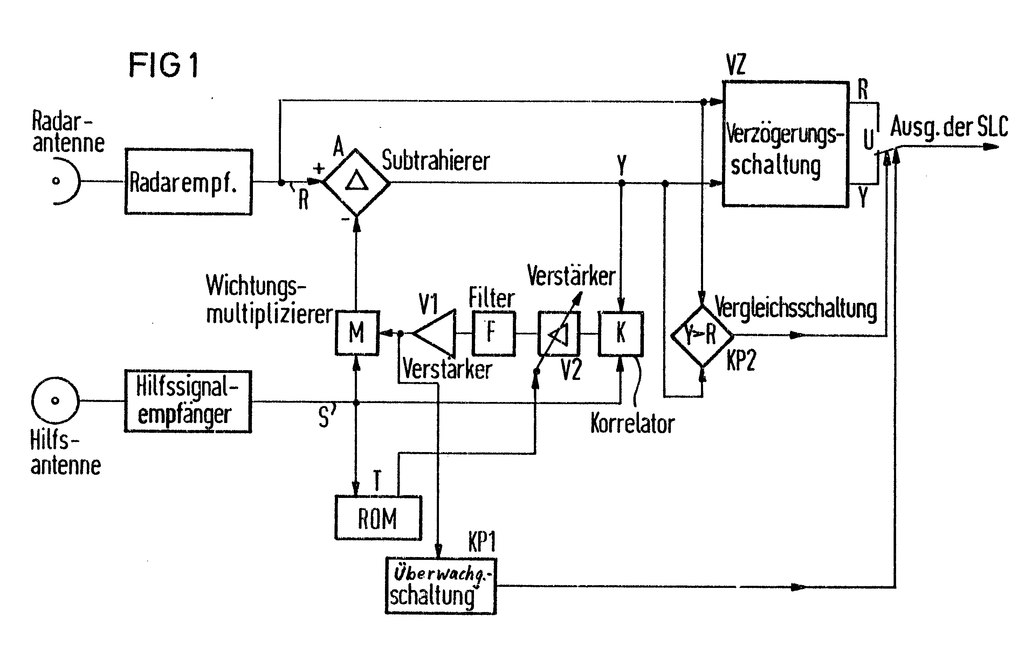

Die Erfindung und weitere Ausgestaltung der Erfindung werden anhand der Figuren 1 bis 3 näher erläutert.

Die Figuren zeigen drei Ausführungsbeispiele, einer SLC-Schaltung als vereinfachtes Blockschaltbild. Sie unterscheiden sich lediglich durch die unterschiedliche Anordnung und Ausbildung der Einrichtung zur Verstärkungssteuerung für den Wichtungsfaktor in der Regelschleife.

Die wesentlichen Bestandteile der SLC-Schaltung zur Nebenzipfelunterdrückung aller Ausführungsbeispiele sind ein Hauptempfangszweig mit einer Radarantenne und einem Radarempfänger und ein Hilfsempfangszweig mit einer als Rundstrahlantenne ausgebildeten Hilfsantenne und einem Hilfsempfänger. Beide Empfangszweige sind über eine Regelschleife miteinander verknüpft. Der Ausgang der Anordnung führt die von Störungen des Nebenzipfelbereiches der Radarantenne bereinigten Signale Y an eine nicht dargestellte Auswerteschaltung. Die Regelschleife enthält einen Subtrahierer ($\Delta$) A, der ein als Subtrahierer betriebener Addierer sein kann und an dessen Eingängen im Falle einer Störung das Störsignal R des Hauptsignalzweiges und ein Störsignal S des Hilfsempfangszweiges, das vorher in einem Wichtungsmultiplizierer M einer Wichtung unterzogen wird, zugeführt werden. Vom Ausgang des Subtrahierers A, der bereits das entstörte Signal Y führt, ist eine Rückführung abgezweigt, die nacheinander einen Korrelator K, ein Filter F und einen Verstärker V1 enthält. Einen zweiten Eingang des Korrelators K wird das Hilfskanalsignal S zugeführt. Vom Ausgangssignal des Korrelators K wird im Filter F ein Mittelwert gebildet, der nach Verstärkung im Verstärker V1 den Wichtungsfaktor für den Wichtungsmultiplizierer M darstellt.

Der Wichtungsfaktor wird in einer Überwachungsschaltung KP1 auf seinen Betrag überwacht. Sobald dieser beim Eintreten eines Störers in die Hauptkeule der Radarantenne einen vorgegebenen Wert überschreitet, wird über eine Steuereinrichtung ein Umschalter U betätigt, der den Ausgang der SLC-Schaltung vom Ausgang des Subtrahierers A auf seinen Eingang umschaltet. Die Schaltungsanordnung zur Nebenzipfelunterdrückung arbeitet unbeeinträchtigt weiter, ohne jedoch einen Einfluß auf das Ausgangssignal Y zu haben. Wird der vorgegebene Wert des Betrages des Wichtungsfaktors unterschritten, dann wird die SLC-Schaltung nach Zuschalten in ihrer Funktion wieder wirksam.

Der Subtrahierer A am Eingang der Regelschleife ist eingangsseitig und ausgangsseitig an eine Vergleichsschaltung KP2 geführt, in der ein Vergleich der Störleistung R vor der SLC-Schaltung und der Störleistung Y am Ausgang der SLC-Schaltung durchgeführt wird. Der Ausgang der Vergleichsschaltung KP2 steuert einen (bzw. den) Umschalter U, über den das der weiteren Auswertung zuzuführende Signal in Abhängigkeit vom Größenverhältnis der beiden Störleistungen R und Y vor oder nach dem SLC-Subtrahierer abgenommen wird. Ist die gemittelte Leistung nach dem SLC-Subtrahierer größer als an seinem Eingang, wird das Ausgangssignal vor dem Subtrahierer abgenommen. Die Umschaltung mittels des Umschalters U erfolgt erst nach Auswertung der Vergleichsmessung in der Vergleichsschaltung KP2. Vor dem Umschalter U ist daher in die Signalwege für die Signale R und Y eine Verzögerungsschaltung VZ eingeschaltet, deren Verzögerungszeit gleich oder größer ist als die Meßzeit in der Vergleichsschaltung.

Auf die Erzeugung des Wichtungsfaktors wird durch eine von der Amplitude des Störsignals im Hilfsempfänger abhängige Verstärkung Einfluß genommen. In Fig. 1 ist zu diesem Zweck in der Rückführung zwischen dem Ausgang des Korrelators K und dem Filter F ein gesteuerter Verstärker V2 eingeschaltet, dessen Verstärkung V über eine Schaltungsstufe T (ROM) durch die Beziehung

$$V = \frac{a}{S^2}$$

bestimmt wird. Darin ist mit S die Amplitude des Störsignals im Hilfsempfänger bezeichnet; a ist ein von der Schaltungsanordnung abhängiger Faktor.

Der gesteuerte Verstärker V2 kann in der Rückführung auch zwischen dem Filter F und dem Multiplizierer M eingesetzt werden. In diesem Falle ist es zweckmäßig, den Verstärker V1 und den gesteuerten Verstärker V2 zu einer Verstärkereinheit zusammenzufassen.

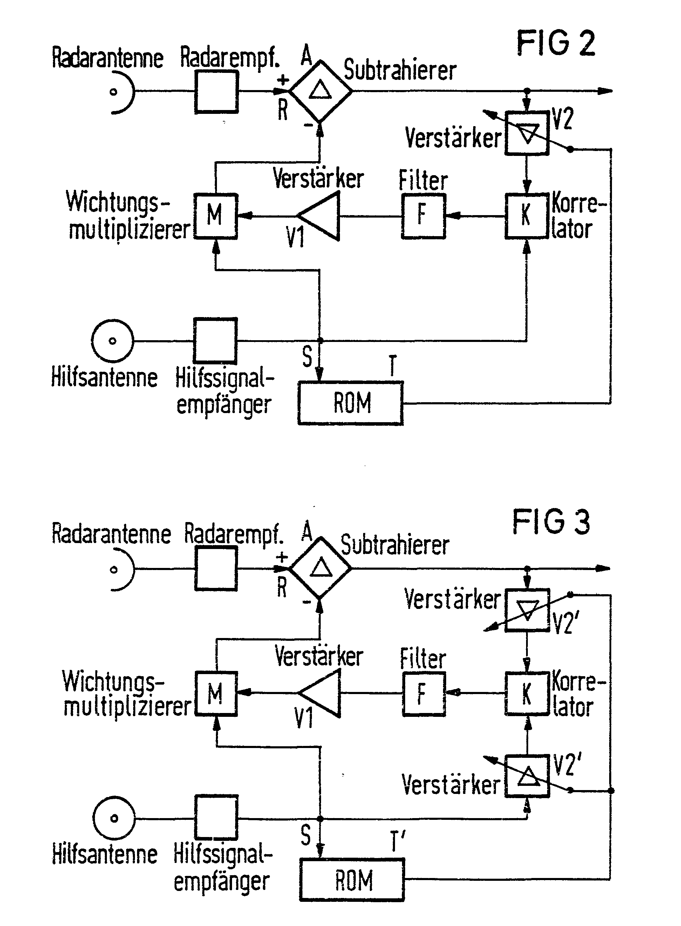

Die SLC-Schaltung nach Fig. 2 unterscheidet sich von Figur 1 durch Einschaltung des gesteuerten Verstärkers V2 vor dem Korrelator K. Dabei kann der gesteuerte Verstärker V2 entweder dem Eingang des Korrelators K für das störungsbereinigte Signal Y — wie in Figur 2 dargestellt — oder dem Eingang für das Störungssignal S des Hilfsempfängers vorgeschaltet sein.

Wenn aufgrund verminderter Anforderungen die SLC-Schaltung nicht bei allen Störerpegeln optimal arbeiten muß, ermöglicht die erfindungsgemäße Anordnung eine kostensparende Realisierung, indem der gesteuerte Verstärker nur auf zwei vorgegebene Verstärkungswerte für zwei feste Amplitudenwerte des Hilfssignals einstellbar ist. Die Einstellung dieser Werte erfolgt in Abhängigkeit davon, ob eine bestimmte Leistung im Hilfsempfänger überschritten wird oder nicht. Eine derartige Abwandlung der Ausführungsbeispiele nach Figur 1 und 2 läßt sich bei digitaler Ausbildung der SLC-Schaltung in einfacher Weise durch einen »Shift« der Signal-Bits verwirklichen.

In Figur 3 ist eine weitere Abwandlung der erfindungsgemäßen Schaltung angegeben. Um die erforderliche Dynamik des gesteuerten Verstärkers klein zu halten, kann die Verstärkung auf zwei Verstärker aufgeteilt werden, wobei die Verstärkung V' nach der Funktion

$$V' = \frac{a}{S}$$

verläuft. Dementsprechend kann an beiden Eingängen des Korrelators K je ein Verstärker V2' vorgeschaltet werden, die aus einer gemeinsamen Schaltungsstufe T' nach der Funktion

$\frac{a}{S}$ gesteuert werden.

## Patentansprüche

1. Schaltungsanordnung zur Nebenzipfelunterdrückung in Radargeräten, unter Verwendung einer Regelschleife als Teil einer Kompensationsschaltung, in der ein über die Nebenzipfel der Radarantenne empfangenes Störsignal (R) durch ein über eine Rundstrahl-Hilfsantenne erhaltenes Hilfssignal (S) des gleichen Störers nach dessen Wichtung in einem Wichtungsmultiplizierer (M) mittels eines in einem Rückführungszweig zwischen einem Korrelator (K) und dem Wichtungsmultiplizierer der Regelschleife vom Korrelationsprodukt des entstörten Ausgangssignals der Nebenzipfelunterdrückung und des Hilfssignals abgeleiteten Wichtungsfaktors in einem Subtrahierer (A) kompensiert wird (Side-Lobe-Canceller, SLC), dadurch gekennzeichnet, daß im Rückführungszweig der Regelschleife eine Überwachungsschaltung (KF1) für den Betrag des Wichtungsfaktors vorgesehen ist, die bei Überschreiten eines vorgegebenen Wertes die Schaltungsanordnung zur Nebenzipfelunterdrückung unwirksam macht, und daß eine Vergleichseinrichtung (KP2) die Störleistung (R) vor und (Y) nach dem Subtrahierer (A) im Radarkanal einer Vergleichsmessung unterzieht und den Ausgang des Radarkanals bei Überwiegen des Meßwertes auf der Ausgangsseite des Subtrahierers (A) mittels eines Umschalters (U) mit dem Eingang des Subtrahierers der Kompensationsschaltung verbindet, und daß ferner eine Einrichtung (T) zur Verstärkungssteuerung für die Bildung des Wichtungsfaktors vorgesehen ist, die eine Verstärkung des Wichtungsfaktors bewirkt, die dem Quadrat der Störamplituden (S) im Hilfskanal umgekehrt proportional ist

$$\left( V = \frac{a}{S^2} \right).$$

2. Schaltungsanordnung nach Anspruch 1, dadurch gekennzeichnet, daß die Überwachungsschaltung (KP1) einen Umschalter (U) steuert, der den Ausgang der Schaltungsanordnung zur Nebenzipfelunterdrückung auf einen Schaltungspunkt des Radarempfängers vor der Kompensationsschaltung umschaltet.

3. Schaltungsanordnung nach Anspruch 1 oder 2, dadurch gekennzeichnet, daß der am Eingang des Subtrahierers (A) abgegriffene Ausgang und der Ausgang der Kompensationsschaltung mit dem von der Vergleichseinrichtung (KP2) gesteuerten Umschalter (U) wahlweise verbunden ist.

4. Schaltungsanordnung nach einem der vorhergehenden Ansprüche, dadurch gekennzeichnet, daß vor dem Umschalter (U) eine Verzögerungsschaltung (VZ) vorgesehen ist, die eine Verzögerung des Ausgangssignals bewirkt, die gleich der oder größer als die Meßzeit in der Vergleichseinrichtung (KP2) ist.

5. Schaltungsanordnung nach einem der vorhergehenden Ansprüche, dadurch gekennzeichnet, daß der gesteuerte Verstärker (V2) im Rückführungszweig der Regelschleife zwischen Korrelator (K) und Wichtungsmultiplizierer (M) angeordnet ist (Fig. 1).

6. Schaltungsanordnung nach einem der Ansprüche 1 bis 4, dadurch gekennzeichnet, daß der geregelte Verstärker (V2) einem der beiden Eingänge des Korrelators (K) vorgeschaltet ist (Fig. 2).

7. Schaltungsanordnung nach Anspruch 1, dadurch gekennzeichnet, daß die Verstärkung

$$\left( V = \frac{a}{S^2} \right)$$

des Wichtungsfaktors auf zwei Verstärker (V2'), von denen je einer den beiden Eingängen des Korrelators (K) zugeordnet ist, derart aufgeteilt ist, daß die Verstärkung jedes der beiden Verstärker de⁻ Störamplitude (S) im Hilfskanal umgekehrt proportional ist

$$\left( V' = \frac{a}{S} \right)$$

(Fig. 3).

## Claims

1. A circuit arrangement for side lobe suppression in radar devices, employing a regulating loop as a component of a compensation circuit wherein an interference signal (R) received via side lobes of the radar antenna is compensated in a subtractor (A) (Side-Lobe-Canceller, SLC) by an auxiliary signal (S) from the same interference source received via an omnidirectional auxiliary antenna, after weighting in a weighting multiplier (M) by a weighting factor derived from the correlation product of the suppressed output signal of the side lobe suppression and of the auxiliary signal in a return branch between a correlator (K) and the weighting multiplier of the regulating loop, characterised in that a monitoring circuit (KP1) is arranged in the return which inactivates the circuit arrangement for the side lobe suppression in the event of the amount of the weighting factor surpassing a predetermined value and that in the radar channel there is a comparison measurement of the interference before (R) and after (Y) the subtractor (A) effected by a comparison device (KP2) which connects the output of the radar channel to the input of the subtractor of the compensation circuit by means of a change-over switch (U) when the measured value predominates on the output side of the subtractor (A), and that a further device (T) which serves to control the amplification for the formation of the weighting factor and brings about amplification of the weighting factor inversely proportional to the square of the interference amplitude (S) in the auxiliary channel $(V = a/S^2)$.

2. A circuit arrangement as claimed in Claim 1, characterised in that the monitoring circuit (KP1) controls a change-over switch (U) which changes over the output of the circuit arrangement for side lobe suppression to a switching point before the compensation circuit of the radar receiver.

3. A circuit arrangement as claimed in Claim 1 or 2, characterised in that the output tapped at the input of the subtractor (A) and the output of the compensation circuit are alternatively connected to the change-over switch (U) which is controlled by the comparison device (KP2).

4. A circuit arrangement as claimed in one of the preceding Claims, characterised in that a delay circuit (VZ) is arranged before the change-over switch (U) to effect a delay of the output signal, the delay being indentical to or longer than the measuring time in the comparison device (KP2).

5. A circuit arrangement as claimed in one of the preceding Claims, characterised in that the controlled amplifier (V2) is arranged in the return branch of the regulating loop between the correlator (K) and the weighting multiplier (M), (Fig. 1).

6. A circuit arrangement as claimed in one of Claims 1 to 4, characterised in that the regulated amplifier (V2) is connected preceding one of the two inputs of the correlator (K), (Fig. 2).

7. A circuit arrangement as claimed in Claim 1, characterised in that the amplification $(V = a/S^2)$ of the weighting factor is divided among two amplifiers (V2'), each of which is assigned to the two inputs of the correlator (K) in such a manner that the amplification of each of the two amplifiers is inversely proportional of the interference amplitude (S) in the auxiliary channel $(V' = a/S)$, (Fig. 3).

## Revendications

1. Montage pour supprimer les lobes secondaires dans des appareils radar, moyennant l'utilisation d'une boucle de régulation faisant partie d'un circuit de compensation, dans lequel un signal parasite (R) reçu par l'intermédiaire du lobe secondaire de l'antenne radar est compensé par un signal auxiliaire (S), reçu au moyen d'une antenne auxiliaire omnidirectionelle, du même brouilleur aprés sa pondération dans un multiplicateur de pondération (M) au moyen d'un facteur de pondération obtenu dans une branche de réaction entre un corrélateur (K) et le multiplicateur de pondération de la boucle de régulation, à partir du produit de corrélation du signal de sortie déparasité du circuit de suppression des lobes secondaires et du signal auxiliare, dans un soustracteur (4) (Side-Lobe-Canceller, SLC), caractérisé en ce que dans la branche de réaction de la boucle de régulation se trouve prévu un circuit (KP1) de contrôle de la valeur du facteur de pondération, qui, lors du dépassement d'une valeur prédéterminée, rend inactif le montage servant à la suppression des lobes secondaires, et qu'un dispositif comparateur (KP1) soumet à une mesure comparative les puissances de parasitage (R) et (Y) en amont et en aval du concentrateur (A) dans le canal radar et, dans le cas où la valeur de mesure sur le côté sortie du soustracteur (A) est prépondérante, relie la sortie du canal radar au moyen d'un commutateur (U) à l'entrée du soustracteur du circuit de compensation, et qu'en outre, il est prévu un dispositif (R) pour commander l'amplification pour la formation du signal du facteur de pondération et qui réalise une amplification du facteur de pondération qui est inversement proportionnelle au carré de l'amplitude de parasitage (S) dans le canal auxiliaire ($V = a/S^2$).

2. Montage suivant la revendication 1, caractérisé par le fait que le circuit de contrôle (KP1) commande un commutateur (U) qui commute la sortie du montage servant à la suppression des lobes secondaires sur un point du circuit du récepteur radar en amont du circuit de compensation.

3. Montage suivant la revendication 1, ou 2, caractérisé par le fait que la sortie, reliée à l'entrée du soustracteur (A), et la sortie du circuit de compensation sont reliées au choix au moyen du commutateur (U) commandé par le dispositif comparateur (KP2).

4. Montage suivant l'une des revendications précédentes, caractérisé par le fait qu'il est prévu en amont du commutateur (U) un circuit de retard (VZ) qui réalise un retard du signal de sortie qui est égal ou supérieur à la durée de mesure dans le circuit comparateur (KP2).

5. Montage suivant l'une des revendications précédentes, caractérisé par le fait que l'amplificateur commandé (V2) est disposé dans la branche de réaction de la boucle de régulation entre le corrélateur (K) et le multiplicateur de pondération (M) (figure 1).

6. Montage suivant l'une des revendications 1 à 4, caractérisé par le fait que l'amplificateur réglé (V2) est monté en amont de l'une des deux entrées du corrélateur (K) (figure 2).

7. Montage suivant la revendication 1, caractérisé par le fait que l'amplification ($V = a/s^2$) du facteur de pondération est répartie entre deux amplificateurs (V2') dont l'un est associé aux deux entrées du corrélateur (K), de telle manière que l'amplification de chacun des deux amplificateurs est inversement proportionnel à l'amplitude de parasitage (S) dans le canal auxiliaire

$$\left( V'' = \frac{a}{S} \right)$$

(figure 3).

**FIG 1**

Radarantenne · Radarempf. · R · A · + · △ · Subtrahierer · − · Wichtungsmultiplizierer · M · V1 · Verstärker · Filter · F · Verstärker · V2 · K · Korrelator · Y · VZ · Verzögerungsschaltung · R · U · Ausg. der SLC · Y · Vergleichsschaltung · Y>R · KP2 · Hilfssignalempfänger · S' · Hilfsantenne · T · ROM · KP1 · Überwachg.schaltung

# FIG 2

Radarantenne  Radarempf.  A  Subtrahierer

+
R  —

Verstärker  V2

Wichtungsmultiplizierer  M  ← Verstärker  V1  ← Filter F  ← Korrelator  K

Hilfsantenne  Hilfssignalempfänger  S  ROM  T

# FIG 3

Radarantenne  Radarempf.  A  Subtrahierer

+
R  —

Verstärker  V2′

Wichtungsmultiplizierer  M  ← Verstärker  V1  ← Filter F  ← Korrelator  K

Verstärker  V2′

Hilfsantenne  Hilfssignalempfänger  S  ROM  T′